(19) **Europäisches Patentamt**
**European Patent Office**
**Office européen des brevets**

(11) **EP 4 343 599 B1**

(12) **EUROPEAN PATENT SPECIFICATION**

(45) Date of publication and mention
of the grant of the patent:
**12.03.2025 Bulletin 2025/11**

(21) Application number: **22197596.4**

(22) Date of filing: **23.09.2022**

(51) International Patent Classification (IPC):
**G06F 21/64** (2013.01)     **H04L 9/00** (2022.01)
**H04L 9/32** (2006.01)

(52) Cooperative Patent Classification (CPC):
**G06F 21/645; H04L 9/3255; H04L 9/50;**
H04L 2209/56

(54) **RAPIDLY VERIFIABLE AGGREGATE SIGNATURES**

SCHNELL VERIFIZIERBARE AGGREGATSIGNATUREN

SIGNATURES D'AGRÉGAT VÉRIFIABLES RAPIDEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.03.2024 Bulletin 2024/13**

(73) Proprietor: **ECOLE POLYTECHNIQUE FEDERALE
DE LAUSANNE
(EPFL)
1015 Lausanne (CH)**

(72) Inventors:
• **Camaioni, Martina**
  **1020 Renens (CH)**
• **Guerraoui, Rachid**
  **1170 Aubonne (CH)**
• **Monti, Matteo**
  **1024 Ecublens (CH)**
• **Roman, Pierre-Louis**
  **1020 Renens (CH)**

• **Vidigueira, Manuel**
  **1004 Lausanne (CH)**
• **Voron, Gauthier**
  **1004 Lausanne (CH)**

(74) Representative: **Vesterinen, Jussi Tapio
LUMI IP GmbH
Rodtmattstrasse 45
3014 Bern (CH)**

(56) References cited:
**CN-A- 110 322 246     CN-A- 113 556 237**

• **SERGEY GORBUNOV: "How Not to Use
Aggregate Signatures in Your Blockchain | by
Sergey Gorbunov | Medium", 9 March 2018
(2018-03-09), XP093024654, Retrieved from the
Internet <URL:https://medium.com/@sergeynog/
how-not-to-use-aggregate-signatures-in-your-
blockchain-63e05be2cbbe> [retrieved on
20230216]**

## Description

TECHNICAL FIELD

The present invention relates to a method for aggregating signatures from any signer on any message, and which provides a short and rapidly verifiable aggregate signature. The present invention also relates to a signature aggregator configured to implement the method.

BACKGROUND OF THE INVENTION

Digital signatures are a fundamental cryptographic building block of the internet. In essence, a digital signature on a message enables a verifier to ensure both the (1) authenticity of the identity of the message signer and the (2) integrity of the signed message. Exchanging any information securely on the internet nowadays most likely requires the use of signatures. However, this ubiquitous use of signatures poses a challenge of scalability. While each signature is small and quick to verify, verifying even thousands of signatures takes a non-negligible amount of space and time. Verifying millions of signatures per second requires a high-end machine with a powerful central processing unit (CPU) and high-capacity network bandwidth. At such scales, using signatures becomes a bottleneck with severe performance consequences to systems, such as blockchains and distributed ledgers. In large quantities, signatures limit the throughput and increase the network bandwidth and memory footprint of these systems, ultimately reducing their usability.

To circumvent this scalability challenge, cryptographers have built upon signature schemes such as BLS according to Dan Boneh, Ben Lynn, and Hovav Shacham, "Short Signatures from the Weil Pairing", Journal of Cryptology, 17(4), 2004, and Schnorr according to Claus P. Schnorr, "Efficient Signature Generation by Smart Cards", Journal of Cryptology, 4(3), 1991 to propose mechanisms for signature aggregation that offer multiple benefits. First, signature aggregation always saves space: an arbitrarily large number of signatures can be compacted into a signature of constant space, equivalent to the space required for just one signature. Second, signature aggregation can save verification time: akin to space, verification can also take a constant amount of time regardless of the number of signatures being verified, and it is equivalent to verifying just one signature. The Schnorr scheme is particularly advantageous for high-throughput systems, such as world-scale cryptocurrencies or messaging systems.

Aggregate signatures, which can be obtained by aggregating a set of signatures on any message from any signer, were proposed in 2003 by Dan Boneh, Craig Gentry, Ben Lynn, and Hovav Shacham, "Aggregate and Verifiably Encrypted Signatures from Bilinear Maps", Advances in Cryptology, EUROCRYPT 2003, using BLS signatures with the goal of reducing to a constant the size of the signatures, and linearly reducing the verification time. While aggregating several signatures always reduces the space footprint to a constant, it does not automatically translate into an equal reduction of the verification time. The latter ability depends on whether or not the signatures are: first, by the same signer for all messages, or, second, all on the same message. In the first case, aggregating BLS signatures from the same signer allows constant-time verification. In the second case, aggregating signatures on the same message and from different signers is referred to as multi-signatures as conceptualized by Kazuharu Itakura and Katsuhiro Nakamura in a publication "A public-key cryptosystem suitable for digital multisignatures", NEC Research & Development, in 1983. Multi-signatures with constant-time verification - and with aggregatable public keys - have been proposed in 2018 for the BLS scheme according to Dan Boneh, Manu Drijvers, and Gregory Neven, "Compact Multi-signatures for Smaller Blockchains", Advances in Cryptology, ASIACRYPT 2018, and the Schnorr scheme according to Gregory Maxwell, Andrew Poelstra, Yannick Seurin, and Pieter Wuille, "Simple Schnorr multi-signatures with applications to Bitcoin", Designs, Codes and Cryptography, 87(9), 2019.

SUMMARY OF THE INVENTION

It is an object of the present invention to overcome at least some of the problems identified above related to aggregating signatures. More specifically, one of the objects of the present invention is to propose a scheme that enables aggregate signatures to be both short and rapidly verifiable for different messages from different signers. To do so, the present invention improves upon the recent BLS scheme by combining a multi-signature scheme, such as the BLS multi-signature scheme, with an interactive protocol between signers and a third-party entity, called aggregator, which may be an untrusted entity.

According to a first aspect of the invention, there is provided a method for aggregating digital signatures as recited in claim 1.

The proposed method offers several advantages. First, the proposed method provides the same authentication guarantees as a classical scheme since verifiers verify all the signer signatures themselves. This means that the proposed method remains safe even if all aggregators are malicious. Second, the proposed method supports any type of payload from an arbitrarily large number of signers. Hence, the proposed method can accelerate any type of application that requires authentication of payloads. Third, the proposed method greatly reduces the CPU consumption for verifiers since verifiers only need to (1) aggregate the signer public keys (required for verification) and (2) verify the one aggregate signature, which is orders of magnitude faster than verifying every individual payload signature for large batches. This computational gain for verifiers is possible thanks to aggregators performing the bulk of the computation required to authenticate payloads. Fourth, replacing all or most of individual signatures in a batch by a single aggregate signature significantly reduces the size of batches thus allowing for a more efficient use of network bandwidth.

The present invention thus proposes a unique authentication scheme that enables the efficient verification (i.e., in constant time) of an aggregate signature obtained by aggregating an arbitrarily-large number of signatures from any signer and on any message.

According to a second aspect of the invention, there is provided a non-transitory computer program product comprising instructions for implementing the steps of the method according to the first aspect of the present invention when loaded and run on computing means of a computing device.

According to a third aspect of the invention, there is provided a signature aggregator configured to carry out the proposed method.

According to a fourth aspect of the invention, there is provided a signature aggregation system configured to carry out the proposed method.

Other aspects of the invention are recited in the dependent claims attached hereto.

BRIEF DESCRIPTION OF THE DRAWINGS

Other features and advantages of the invention will become apparent from the following description of a non-limiting example embodiment, with reference to the appended drawings, in which:

- Figure 1 schematically shows a simplified system where the proposed signature aggregation method can be applied;

- Figure 2 is a flow chart illustrating an example signature verification scheme according to the present invention;

- Figure 3 is a flow chart illustrating a traditional signature verification scheme; and

- Figure 4 is a flow chart illustrating an example optional reply sequence that may be used to complement the verification scheme outlined in Figure 2.

DETAILED DESCRIPTION OF AN EMBODIMENT OF THE INVENTION

An embodiment of the present invention will now be described in detail with reference to the attached figures. As utilised herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y, and z." Furthermore, the term "comprise" is used herein as an open-ended term. This means that the object encompasses all the elements listed, but may also include additional, unnamed elements. Thus, the word "comprise" is interpreted by the broader meaning "include", "contain" or "comprehend". Identical or corresponding functional and structural elements which appear in the different drawings are assigned the same reference numerals. It is to be noted that the use of words "first", "second" and "third", etc. may not imply any kind of particular order or hierarchy unless this is explicitly or implicitly made clear in the context.

Some definitions that help understand the teachings of the present invention are given next.

The present invention relies on send and receive communication primitives and on cryptographic proofs for the purpose of authentication and commitment. Cryptographic proofs involve two entities: a prover who wishes to prove some statement or computation result, and a verifier who wishes to verify the correctness of the proof provided by a prover.

The protocol in the present invention uses the two following communication primitives:

- Send: *send*(*m, target*) executed by an entity sending a message m to the entity *target.*
- Receive: *receive*() → (*m, source*) executed by an entity in order to receive a message m from the identity *source* that previously sent m.

The receive and send primitives by definition follow the message passing model of communication but may also be implemented using shared memory. In practice, the *target* and *source* fields correspond to the address of the concerned entity, it may for instance be a pair composed of an internet protocol (IP) address and a port at which the entity may be contacted. For convenience however, we choose in the following to abstract the addressing scheme and use the primitives colloquially without specifying the exact addresses of the target and source entities.

A communication is said to be reliable when every message that is sent is eventually received as it was sent. Widely-used transport protocols such as transmission control protocol (TCP) or QUIC offer such a reliability thanks to their use of acknowledgments, message re-emissions and checksums.

A signature scheme involves a signer (or prover) and a verifier. The signer wishes to create a signature on a message as a proof for the authenticity of the identity of the message issuer. The verifier uses the signature to ensures correct authentication of the message. A signature scheme is defined by three functions:

- Key generation: *key-gen*() → (*pk, sk*) executed by a signer to generate a pair of public key *pk* and secret/private key *sk*. The generation function is executed only once at setup before the signer can sign anything.

- Sign: *sign*(*m, sk*) → σ executed by a signer to sign the message m using its secret key *sk,* the signer obtains a signature σ as an output of the function.

- Verify: *verify*(*m,* σ, *pk*) → true/false (or correct/incorrect) executed by a verifier to check the correctness of the signature σ on the message *m* sent by a signer whose public key is *pk.*

A public key infrastructure (PKI) is commonly used to provide all the verifiers with access to the signers' public keys. A public key may be associated with a signer's identity (id) such as its email address. For instance, if a verifier wants to verify the signature of an email it receives, the verifier needs to ask the PKI for the public key that is paired with the email sender in order to verify the email signature.

Certain signature schemes (namely BLS and Schnorr) support aggregatable signatures, i.e., they allow multiple signatures to be merged into one using the mathematical constructions of the scheme. For instance, aggregating BLS multi-signatures corresponds to a simple multiplication.

In addition to the three functions of a signature scheme described previously, an aggregatable signature scheme also provides the following functions:

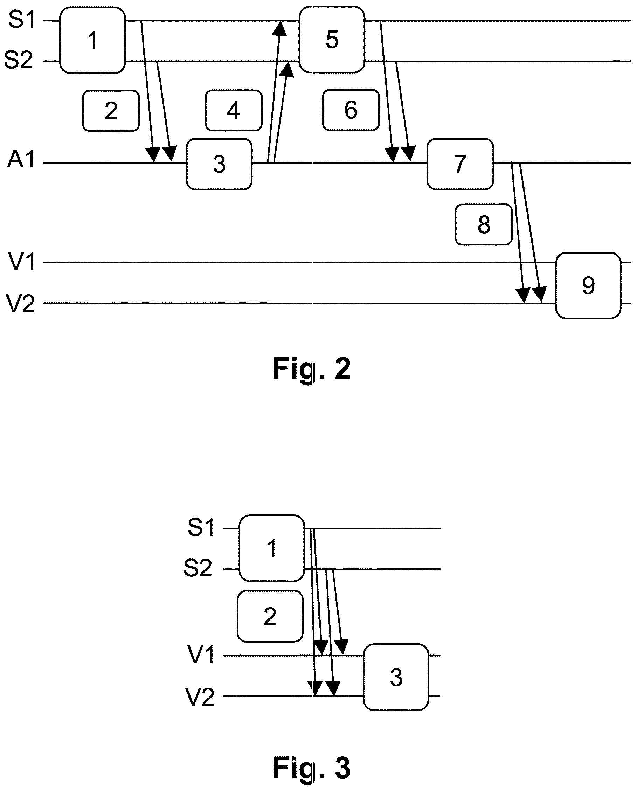

- Signature aggregation: *sig-agg*($\sigma_1$, ..., $\sigma_n$) → $\Sigma_{1,...,n}$ executed by any entity possessing the signatures ($\sigma_1$, ..., $\sigma_n$) - on a set of messages ($m_1$, ..., $m_n$) - to obtain a single aggregate signature $\Sigma_{1,...,n}$. In this invention, the aggregation is performed by an entity called aggregator as explained in more detail later with reference to Figure 2. The aggregator can be a signer, a verifier or a third-party entity.

- Public key aggregation: *pk-agg*($pk_1$, ..., $pk_n$) → $PK_{1,...,n}$ executed by a verifier using the set of public keys ($pk_1$, ..., $pk_n$), queried for instance from a PKI, to obtain the aggregate public key $PK_{1,...,n}$. Public key aggregation is carried out to perform an aggregate verify function.

- Aggregate verify: *agg-verify* (($m_1$, ..., $m_n$), $\Sigma_{1,...,n}$, $PK_{1,...,n}$) → true/false (or correct/incorrect) executed by a verifier to check the correctness of an aggregate signature $\Sigma_{1,...,n}$ on a set of messages ($m_1$, ..., $m_n$) using the aggregate public key $PK_{1,...,} n$. "Aggregate verify" is more commonly referred to as "batch verify", however we avoid this term here to avoid confusion with our use of the term "batch" in the protocol defined later with reference to Figure 2.

The literature defines aggregate signatures and multi-signatures. Aggregate signatures can be obtained by aggregating signatures on any message from any signer. Multi-signatures are aggregatable signatures designed to have a set of signers sign the same message. Several multi-signatures on the same message can be aggregated into a single aggregated multi-signature (the terms "aggregate signature" and "aggregated signature" are used interchangeably in the present description). In particular, BLS multi-signatures can execute the *agg-verify* function in constant time regardless of the number of signatures to aggregate. The present invention relies on this unique feature of BLS multi-signatures according to Dan Boneh, Manu Drijvers, and Gregory Neven, "Compact Multi-signatures for Smaller Blockchains", Advances in Cryptology, ASIACRYPT 2018.

Apart from digital signatures, data payloads can also be authenticated using message authentication codes (MACs) that rely on symmetric cryptography between pairs of entities. Since encryption and decryption in symmetric cryptography is faster than in asymmetric cryptography, MACs are therefore more efficient than signatures in the appropriate scenarios. However, each pair of entities must first generate a keypair together before they can use MACs, e.g., using a Diffie-Hellman key exchange with their respective secret and public keys. Due to the cost of initialising MACs, especially among many entities, MACs are only beneficial for long-lived connections while signatures are preferable for short-lived connections and "fire-and-forget" schemes such as a client sending a signed transaction in a cryptocurrency.

The present invention according to this embodiment relies on a commitment scheme, which involves a prover and a verifier. The prover wishes to create a commitment on a value that is (1) binding, i.e., once committed, a value cannot be changed, and optionally (2) hiding, i.e., a commitment reveals nothing about the committed value before the commitment is opened. The verifier can ensure that both properties of the commitment are respected once the prover opens the commitment as explained below. A commitment scheme is defined by two functions:

Commit: *commit*(*v, r*) → *c* executed by a prover to generate a commitment c on a value v, mixed with a random number r for the hiding property. A binding-only scheme does not require a random number r to hide the value, hence v is the only input of the function in that case.

Verify: *verify*(*v, r, c*) → true/false (or correct/incorrect) executed by a verifier to check the correctness of the commitment c on the value v and random number *r.* For the verifier to execute the *verify* function, the prover must first open the commitment which is typically done by simply sending all the inputs of the *verify* function to the verifier. If the commitment is binding-only, r was not used in the *commit* function and is thus also omitted in the *verify* function.

The present invention only requires the binding property and not the hiding property for its commitment schemes; therefore, it does not require the use of random numbers. A binding-only commitment schemes can, for example, be performed using a hash function to commit to a simple value or using a Merkle tree to efficiently commit to a set of values. In both cases, the output of the *commit* function c is the digest (a cryptographically secured fingerprint) of the value or of the set of values. A message digest can be understood as a cryptographic fingerprint containing a string of digits created by a one-way hashing formula. Message digests are generally designed to protect the integrity of a piece of data or media to detect changes and alterations to any part of a message.

Merkle trees enable the creation of proofs of inclusions of values in a committed set of values, i.e., proofs that a value is committed as part of a committed set of values. Merkle trees enable efficient verification since the size of the proofs of inclusions is logarithmic compared to the size of the set of values. Therefore, to prove that a single value is committed, it is not necessary for a prover to send the entire set of committed values to the verifier, it is sufficient to send the value and the logarithmic-sized proof of inclusion of that value in the set.

A Merkle tree commitment scheme that is binding-only can be defined by three functions:
Commit: $commit(v_1,..., v_n) \rightarrow c$ executed by a prover to generate a commitment/digest c on a set of values $(v_1, ..., v_n)$.

Generate proof of inclusion: $gen\text{-}prf\text{-}incl(v_i, (v_1,..., v_n)) \rightarrow \pi$ executed by a prover to generate a proof $\pi$ proving that value $v_i$ is committed/included in a set of values $(v_1,...,v_n)$.

Verify proof of inclusion: $verify(v, \pi, c) \rightarrow$ true/-false (or correct/incorrect) executed by a verifier to check the correctness of the proof of inclusion $\pi$ stating that the value v is included in the set of values of digest c. It is also possible to generate and verify proofs of inclusion for a subset of the set of values, instead of one value, but it is not required for the present invention.

We next detail the principle of Merkle trees. Every leaf in a Merkle tree is the hash of a value in a set of values; every non-leaf node (i.e., a branch) in the tree is the hash of its children's nodes. Since the root of the Merkle tree is the hash of its children - hence is the hash of its children's children, etc. - the root of the Merkle tree is in essence a hierarchical digest of all values in the set. The Merkle tree root can be obtained by recursively constructing the Merkle tree bottom up starting from the leaves. Therefore, a prover can use the root of the Merkle tree computed on a set of values as the commitment/digest of that set of values.

If a verifier knows the Merkle tree root of a committed set of values, even if it knows nothing about the set of values, it suffices for a prover to send a value v with a matching partial tree called a Merkle proof of inclusion $\pi$ to prove to the verifier that v is indeed in the committed set of values. The verifier first ensures that the hash of v is a leaf in the Merkle proof of inclusion $\pi$ it receives. The verifier then recursively computes the root of the Merkle tree. Finally, the verifier is sure of the inclusion of v in the set of values if the root of the Merkle tree computed using $\pi$ is the same as the one committed to by the prover.

The invention uses commitments on sets of values, such as Merkle trees, to allow aggregators to prove to signers that a given payload is indeed in a batch of payloads as explained later in more detail.

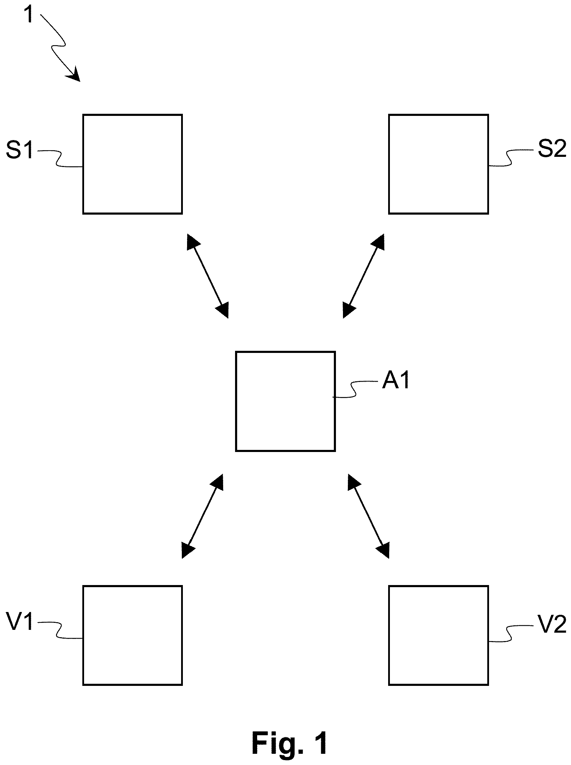

A brief overview of the present invention is given next. The present invention proposes a signature scheme with constant-time verification on aggregate signatures. At the core of the proposed scheme lies an interactive protocol between a plurality of signers S1, S2 (only two shown in the figures for simplicity) and one or more aggregators (only one shown in the figures) schematically shown in Figure 1. In this example, at least one of the aggregators A1 is an untrusted third-party entity (according to another example, all of the aggregators are untrusted third-party entities), although this does not have to be the case. The setup or system 1 shown in Figure 1 also comprises one or more verifiers V1, V2 (only two shown in the figures for simplicity). It is to be noted that the aggregator(s) and the verifier(s) may in some implementations be included a single apparatus.

The main insight behind the present invention according to this embodiment is that BLS signatures are rapidly verifiable once aggregated if they sign the same data, i.e., if they are BLS multi-signatures. The goal of the protocol that powers the proposed scheme is to have many signers sign the same data despite the fact that they originally sign different payloads. The proposed scheme in the present example thus brings forward a solution in which the original signatures are transformed or converted into aggregatable ones.

In the present embodiment, the proposed scheme relies on third-party untrusted servers called aggregators to perform this transformation. Little assumptions are required on aggregators: the proposed scheme is safe even if all aggregators are malicious and only a single aggregator needs to function correctly to guarantee forward progress.

The aggregators A1 act as proxies between the signers S1, S2 and the verifiers V1, V2. More specifically, the aggregators (1) receive and verify signed payloads from a plurality of signers that they package into batches, then they (2) aggregate the signatures within a batch as explained later, and they finally (3) send the processed batch with an aggregate signature that is fast to verify to the verifiers. The aggregation of signatures in a batch is performed and orchestrated by the aggregator A1 with the help of each participating signer S1, S2. Once a batch is created, the aggregator A1 asks each signer S1, S2 to multi-sign the digest of the batch, e.g., the root of the Merkle tree computed on the batch, using their BLS secret key. By BLS multi-signing the same batch digest, the signers generate multi-signatures that are efficiently verifiable when aggregated. Once the aggregator A1 receives and verifies the BLS multi-signatures it asked for, it aggregates them into a single BLS multi-signature and replaces the n individual payload signatures in the batch with a single aggregated BLS multi-signature of the batch digest. This BLS multi-signature of the batch digest is in essence an aggregate signature of the payloads in the batch. The verifiers V1, V2 only need to verify one aggregate BLS signature per batch of payloads instead of one signature per payload.

In the present embodiment, for safety, a signer can only have up to one payload per batch, as detailed later. However, the proposed scheme supports the existence of arbitrary many (untrusted) aggregators that can create batches concurrently. Signers can therefore easily circumvent this limitation by contacting different aggregators if they want to submit several payloads at once.

Compared to a classical scheme, the interactive protocol behind the proposed scheme adds a delay before a payload is received by a verifier. This delay may be mostly problematic for low-throughput verifiers that do not necessarily benefit from the proposed scheme. For high-throughput verifiers however, since the proposed scheme is able to save a lot of verification time, the time saved for signature verification is far greater than the time lost due to the interactive protocol.

The proposed scheme can be used in any environment requiring verifiers to verify the signatures of many payloads from different signers. For instance, the proposed scheme can be used to increase the throughput of large-scale blockchains, cryptocurrencies, or any replicated service by being plugged in to their broadcast/consensus protocol. The proposed scheme can also be used to increase the throughput of any service built on top of such a system, e.g., an individual smart contract on a specific blockchain. Since the proposed scheme reduces the storage footprint required for the authentication of a batch of payloads, it can be used to more efficiently archive authenticated payloads akin to BLS aggregate signatures as proposed by Dan Boneh, Craig Gentry, Ben Lynn, and Hovav Shacham, "Aggregate and Verifiably Encrypted Signatures from Bilinear Maps", Advances in Cryptology, EUROCRYPT 2003. For instance, blockchains store authenticated transactions forever, with the proposed scheme, as with BLS aggregate signatures, only one signature per block is required regardless of the number (nowadays in the thousands) of transactions that it contains.

The protocol overview is next briefly explained with reference to Figure 2. In other words, we here overview the protocol behind the proposed scheme following the example depicted in Figure 2. In this example, first and second signers S1, S2 send in steps 1 and 2 their signed payload to any aggregator, here A1, instead of sending the payloads directly to verifiers V1, V2 as they would typically do. The aggregator A1 then bundles many signed payloads into a batch and initiates a short interactive protocol with the signers (steps 3 to 6), as detailed later, to replace as many individual payload signatures in the batch as possible with a single aggregated multi-signature (step 7). The aggregator A1 finally sends the batch of payloads to the verifiers (step 8), each of which verifies the signature(s) in the batch (step 9). A processed batch sent in step 8 contains one aggregated multi-signature and may contain one or more payload signatures sent by signers in step 2 if some signers did not reply in time in step 6. As such, the proposed scheme performs optimally when all signers correctly reply with a multi-signature in step 6.

The flow chart of Figure 2 illustrates the added complexity of the proposed scheme compared with a classical scheme illustrated in the flow chart of Figure 3. In both protocols, step 1 performed by the signers S1, S2 is the same. The payload sent in step 2 is the same according to both protocols, but the destination differs: the signers S1, S2 send their payloads to the aggregator(s) in the proposed scheme. Step 3 for the classical scheme constitutes the first part of step 3 in the proposed scheme: each payload signature is verified individually. The second part of step 3 in the proposed scheme - as explained in more detail in the following - and everything that follows differs from the classical scheme.

The proposed scheme including the protocol is next explained in more detail with reference to the flow chart of Figure 2. As shown, the scheme includes in this simplified example the first and second signers S1, S2, the aggregator A1 and the first and second verifiers V1, V2. These entities may be deployed in any machine and/or hardware element and by the same or by different organisations, and they are connected via the internet in the present example. For instance, in the context of a cryptocurrency, each user may be running the client of the cryptocurrency on their smartphone with the goal of having their transactions validated by the validators of the cryptocurrency running on servers in datacentres. In such a case, each client is a signer, each validator is a verifier, and aggregator(s) are special cryptocurrency proxies also running on servers in datacentres or hosted by users.

In the following, $\sigma_{Si}^{ind}(m)$ denotes the individual signature of message m by signer $Si$ using any signature scheme (aggregatable or not), e.g., Ed25519 for instance according to Daniel J. Bernstein "Curve25519: New Diffie-Hellman Speed Records", Public Key Cryptography, PKC '06, volume 3958, 2006, or RSA. Furthermore, $\sigma_{Si}^{BLS}(m)$ denotes the aggregatable multi-signature using $Si's$ BLS secret key.

We assume that all the entities (in the present example the aggregator A1 and the verifiers V1, V2) verifying signatures have access to a PKI populated with a dictionary that maps the identifier (e.g., a simple integer) of every entity with their public keys. The PKI is queried in order to fetch the public key required to verify a signature, e.g., a verifier uses *Si's* identifier $id_{Si}$ to query the PKI in order to verify $\sigma_{Si}^{ind}(m)$ and $\sigma_{Si}^{BLS}(m)$ described previously. Prior to signature verification, a verifier simply needs to query the PKI using *Si's* identifier as a query parameter and obtains *Si's* public key(s) in return. In the following, each of the protocol step depicted in Figure 2 is explained in more detail.

To guarantee forward progress, we further assume that the underlying communication protocol used by the present invention is reliable as explained previously. This reliability can be offered at the transport layer, using for instance the widely-used transport protocols TCP or QUIC, or at a higher level (e.g. session layer, application layer) as defined by the open systems interconnection (OSI) model for networked communication. The protocol of the present invention remains safe even if the communication protocol is not reliable, but it loses forward progress in that case. We also assume that each entity knows the address(es) of the other entities it must communicate with. This knowledge can be provided, for instance, by an external repository of addresses akin to the public key infrastructure (PKI) or by the software that uses the present invention as one of its components.

In step 1, the signers S1, S2 each prepare to send a signed payload to any aggregator to be processed by the verifiers V1, V2, e.g., they can opt for the closest aggregator A1 to minimise latency, or use round-robin arrangement to equally distribute the load among aggregators.

In step 2, the signer S1 sends the triplet ($id_{S1}$, $p_1$, $\sigma_{S1}^{ind}(p_1)$ ) to the aggregator using its identifier $id_{S1}$, payload $p_1$, and payload signature $\sigma_{S1}^{ind}(p_1)$ . Similarly, the signer S2 sends the triplet ($id_{S2}$, $p_2$, $\sigma_{S2}^{ind}(p_2)$ ) to the aggregator A1. The respective payload signature is obtained by using a respective first secret key of the respective signer. Thus, in this step, the respective signer sends a respective first data package to the aggregator.

In step 3, the aggregator A1 first verifies each payload signature $\sigma_{Si}^{ind}(p_i)$ it receives by using the public key of each signer it obtains after querying the PKI using *Si's* id. The aggregator A1 then discards all the payloads whose signature is invalid, and bundles the correctly signed payloads into a batch either periodically or once the batch contains enough payloads. The aggregator A1 ensures that there is no more than one payload per signer in the batch (for safety reasons explained further).

The aggregator A1 then computes the cryptographic commitment (e.g., using a Merkle tree) of the batch to obtain (1) the batch digest (e.g., the root of the Merkle tree computed on the batch) and (2) as many proofs of inclusion (e.g., using Merkle proofs of inclusion) of payloads in the batch as there are payloads in the batch. The aggregator A1 prepares a request for each of its signers with the expectation that they multi-sign the batch digest (in this example the root of the Merkle tree) using their BLS secret key, with the goal of aggregating all these multi-signatures in step 7.

In step 4, the aggregator A1 sends the digest of the batch *digest(batch)* to each signer *Si* and the proof that their payload is included in the batch *Proof(pᵢ ∈ batch)*. Thus, in this step, the aggregator sends a respective second data package to the respective signer.

In step 5, each signer *Si* verifies that (1) its payload $p_i$ matches the received proof of inclusion *Proof(pᵢ ∈ batch)*, and that (2) the received *digest(batch)* also matches the *Proof (pᵢ ∈ batch)*. If the aggregator A1 sent correct digests and proofs of inclusions to all the signers S1, S2, then all the signers received the same batch digest. The respective signer *Si* then generates its BLS multi-signature of the batch digest. The respective batch digest signature is obtained by using a respective second secret key of the respective signer. In this example, the first and second secret keys are from different cryptographic signature schemes, and the respective first secret key is different from the respective second secret key, where at least the second secret key is the secret key of a BLS multi-signature scheme. However, alternatively the first and second secret keys are from the same cryptographic signature scheme, namely BLS (in this example), and the respective first secret key may be the same as the respective second secret key. In the latter case, the second secret key (the BLS key) could also be used as the first secret key in step 1. However, doing so would take more time for the aggregator to verify the payload signature in step 3, and thus the process would become less efficient. The rationale is that verifying a BLS signature is slower than verifying a signature computed from another signature scheme such as Ed25519. BLS signatures are only interesting performance-wise if they are aggregated.

In step 6, each *Si* sends the pair ($id_{Si}$, $\sigma_{Si}^{BLS}(digest(batch))$ ) back to the aggregator A1 thus attesting that their payload is in the batch whose digest they have signed. Thus, in this step, the respective signer sends a respective third data package to the aggregator.

In step 7, the aggregator A1 verifies that each multi-signature $\sigma_{Si}^{BLS}(digest(batch))$ it receives (1) is signing the correct batch digest (typically the same digest across all signatures but if a signer signs the wrong digest, then its batch signature is discarded) as computed in step 3 - and not another value - and that (2) it is indeed signed by *Si* by using *Si's* public key obtained by querying the PKI using Si' id. If the multi-signature from the signer *Si* is valid, the aggregator A1 replaces the

payload signature $\sigma_{Si}^{ind}(p_i)$ received in step 2 by $\sigma_{Si}^{BLS}(digest(batch))$ received in step 6. The aggregator A1 then aggregates all batch digest multi-signatures into an aggregated multi-signature $\sum_{S\star}^{BLS}(digest(batch))$. This aggregation ideally replaces all individual payload signatures in a batch with a single aggregated multi-signature if all signers correctly replied in step 6.

Slow or faulty signers may not send a multi-signature in step 6 fast enough when compared to other signers. In order to not penalise the fast signers, the aggregator A1 in this example thus cannot wait for all messages in step 6 forever. Therefore, regardless of the status of straggler signers, the aggregator A1 proceeds to step 8 after a given time period to ensure forward progress of the protocol for all. For straggler signers, the aggregator A1 simply uses the payload signatures sent in step 2 to authenticate their payloads. The signatures from straggler signers are hence not aggregatable; this fallback mechanism guarantees the safety of the proposed mechanism at the cost of efficiency.

In step 8, the aggregator A1 sends to the verifiers: (1) all the payloads $p_i$ in the batch; (2) the one aggregated multi-signature of the batch digest $\sum_{S\star}^{BLS}(digest(batch))$; (3) all the payload signatures $\sigma_{Si}^{ind}(p_i)$ from the slow signers, if any; (4) all the identifiers of the signers $id_{Si}$ so that the verifiers can query the PKI and obtain the signer public key(s), either BLS public key or the public key from the scheme used for individual signatures depending on the used signature. In this example, the same information is sent to all of the verifiers. The aggregator A1 makes sure that the verifiers are able to distinguish which signers signed which payload. To do so, the aggregator A1 can for instance send the matching payloads and identifiers in the same order, e.g., the second identifier is used to get the public key to verify the signature of the second payload. Thus, in this step, the aggregator sends a respective fourth data package to each of the verifiers.

In step 9, the one or more verifier(s) $Vi$ (the first and second verifiers V1, V2 in this example) authenticate payloads by verifying all the signatures sent by the aggregator A1. First, each $Vi$ checks that no signer has more than one payload in the batch (for safety reasons as explained later in more detail). Second, each $Vi$ fetches from the PKI the BLS public key of each signer who sent a multi-signature of the batch digest (and which was timely received in step 6). Each $Vi$ then (1) computes the aggregate public key $PK$ using the BLS public key of each signer who BLS multi-signed the batch digest, and (2) computes the commitment of the batch to obtain the batch digest. Using the computed $PK$ and the batch digest, each $Vi$ can verify for itself the correctness of the multi-signature $\sum_{S\star}^{BLS}(digest(batch))$. Verifying this aggregated multi-signature only requires a constant amount of time regardless of the number of signers. Finally, each $Vi$ verifies the correctness of the payload signatures from the straggler signer(s) once it fetched the corresponding public keys from the PKI using the signer's identifier.

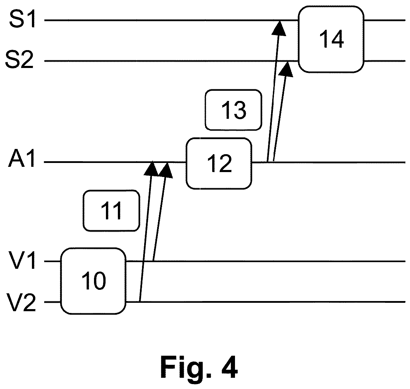

Step 9 concludes the protocol powering the proposed scheme, which provides the same safety guarantees ensured by step 3 of the standard scheme outlined in Figure 3. In addition to this core protocol, the proposed scheme also affects the way the verifiers V1, V2 send acknowledgements (or replies) back to the provers S1, S2 if it is required by the application using the proposed scheme. Indeed, the aggregators A1 act as proxies between the signers and verifiers, and the verifiers do not know how to send information directly to the signers. The verifiers V1, V2 therefore send the reply to the aggregators A1 who forward it to the signers. With reference to Figure 4, we detail the optional series of steps dedicated to the reply.

In step 10, as acknowledgement, each $Vi$ prepares to send the signature of the batch they received in step 9 to the aggregator A1 to confirm that the verifiers $Vi$ received and processed it. The verifiers use their BLS secret key to sign the batch in order to let the aggregator A1 aggregate all these signatures in step 12.

In step 11, each $Vi$ sends the triplet ($id_{Vi}$, digest (batch), $\sigma_{Vi}^{BLS}(digest(batch))$) to the aggregator A1 using its identifier $id_{Vi}$, the digest of the batch $digest(batch)$ (e.g. using the root of the Merkle tree) and a BLS multi-signature of the batch $\sigma_{Vi}^{BLS}(digest(batch))$. Thus, in this step, a respective verifier sends a respective fifth data package to the aggregator(s).

In step 12, similar to step 7, the aggregator A1 verifies that each multi-signature $\sigma_{Vi}^{BLS}(digest(batch))$ it receives (1) is signing the correct batch digest that it sent to the verifiers in step 8 - and not another value - and that (2) it is indeed signed by $Vi$ by using $Vi$'s public key obtained by querying the PKI using $Vi$' id. The aggregator A1 then aggregates all the multi-signatures of the batch digest into an aggregated multi-signature $\sum_{V\star}^{BLS}(digest(batch))$. Similar to step 3, the aggregator A1 then computes a proof of inclusion (e.g., using Merkle proofs of inclusion) for each payload in the batch.

In step 13, the aggregator A1 sends to each signer Si: (1) the batch digest $digest(batch)$, (2) the proof that $Si$'s payload is in the batch $Proof(p_i \in batch)$; (3) the aggregated multi-signature

$$\sum_{V\star}^{BLS}\big(digest(batch)\big)$$

proving that all verifiers signed the digest of the batch (which contains *Si's* payload according to the second point); and (4) all the verifier identifiers $id_{Vi}$ that are necessary to obtain the corresponding public keys via the PKI. Thus, in this step, the aggregator sends a respective sixth data package to each of the signers.

In step 14, similar to step 5, each signer *Si* verifies that the proof of inclusion *Proof($p_i \in$ batch)* it receives matches its payload $p_i$ and the batch digest *digest(batch)*. Similar to (what the verifiers do in) step 9, each signer *Si* then fetches from the PKI the BLS public key of each verifier by using their identifier received in step 13. Each *Si* then computes the aggregate public key PK using the BLS public key of each verifier. Using the computed PK and received batch digest, each *Si* can verify for itself the correctness of the multi-signature

$$\sum_{V\star}^{BLS}\big(digest(batch)\big)$$

. If the multi-signature is correct, then all the verifiers have signed the digest of the batch that contains *Si's* payload, thus correctly completing the reply/acknowledgement phase.

To summarise the main steps carried out by the aggregator, the method for aggregating digital signatures comprises the following steps: receiving first data packages from signers, each first data package comprising a signer identifier, a payload, and a payload signature; verifying the payload signatures to determine whether or not the payloads are correctly signed; bundling at least some of the correctly signed payloads into a batch; obtaining a batch digest, and proofs of inclusion of the payloads in the batch; sending second data packages comprising the batch digest and a respective proof of inclusion to the signers, the respective proof of inclusion proving that the payload of the respective signer is included in the batch; receiving third data packages from the signers, each third data package comprising the signer identifier, and a respective batch digest multi-signature; verifying the batch digest multi-signatures to determine whether or not the batch digest is correctly signed by the respective signers; aggregating at least some of the correctly signed batch digest multi-signatures to obtain an aggregated batch digest multi-signature; and including the aggregated batch digest multi-signature in the batch, and optionally removing the payload signatures from the batch, which were received from the signers that correctly (i.e. within a given time window) signed the batch digest. The payload and batch digest signatures are in this example obtained by using different secret keys of the respective signer.

The present invention also relates to a signature aggregation system comprising the signature aggregator A1 described above, at least two signers S1, S2 configured to send the sets of first and third data packages to the aggregator A1, and one or more verifiers configured to receive the aggregated batch digest signature from the aggregator A1 and to verify the aggregated batch digest signature.

Due to the construction of the proposed scheme, in the present embodiment, each signer can only have up to one payload per batch for their own safety. If a signer were to have two payloads in the same batch, then it would have to multi-sign the same batch digest twice in step 5 resulting in two identical multi-signatures for different payloads. This can be exploited by a malicious aggregator to break the authentication of payloads. For instance, suppose the signer S1 sends payloads x and *y* in step 2 to the malicious aggregator A1. In step 3, the aggregator A1 adds a forged payload z to the batch that contains x and *y*. In step 4, the aggregator A1 sends the batch digest to the signer S1 with proofs that x and *y* are included in the batch but without disclosing that z is also included. In step 5, the signer S1 multi-signs the batch digest for x and for *y* as intended. In step 7, the aggregator A1 duplicates the multi-signature of the digest from the signer S1 to claim that the signer S1 also signed z, thus breaking the authentication safety. Therefore, both correct aggregators (in step 3) and verifiers (in step 9) should advantageously ensure that there can be only up to one payload per signer per batch. This limitation can easily be circumvented by having signers send payloads to different aggregators, or by simply waiting in between each payload sent in step 2 to have them included in different batches from the same aggregator.

The method steps described above may be carried out by suitable circuits or circuitry when the process is implemented in hardware or using hardware for individual steps. However, the method or at least some of the method steps may also or instead be implemented in software. Thus, at least some of the method steps can be considered as computer-implemented steps. The terms "circuits" and "circuitry" refer to physical electronic components or modules (e.g., hardware), and any software and/or firmware ("code") that may configure the hardware, be executed by the hardware, and or otherwise be associated with the hardware. The circuits may thus be operable (i.e., configured) to carry out or they comprise means for carrying out the required method steps as described above.

While the invention has been illustrated and described in detail in the drawings and foregoing description, such illustration and description are to be considered illustrative or exemplary and not restrictive, the invention being not limited to the disclosed embodiment. Other embodiments and variants are understood, and can be achieved by those skilled in the art when carrying out the claimed invention, based on a study of the drawings, the disclosure and the appended claims. Further variants may be obtained by combining the teachings of any of the designs explained above.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A method for aggregating digital signatures, the method comprising:

    - an aggregator (A1) receiving (2) a set of first data packages from a set of signers (S1, S2), a respective first data package comprising a respective signer identifier, a respective payload, and a respective payload signature obtained by using a respective first secret key of a respective signer (S1, S2);
    - the aggregator (A1) verifying (3) the payload signatures to determine whether or not the payloads are correctly signed;
    - the aggregator (A1) bundling (3) a set of correctly signed payloads into a batch;
    - the aggregator (A1) obtaining (3) a batch digest for the batch, and proofs of inclusion of the payloads in the batch;
    - the aggregator (A1) sending (4) a respective second data package comprising the batch digest and a respective proof of inclusion to the respective signer (S1, S2), the respective proof of inclusion proving that the payload of the respective signer (S1, S2) is included in the batch;
    - the aggregator (A1) receiving (6) a set of third data packages from the set of signers (S1, S2), a respective third data package comprising the respective signer identifier, and a respective batch digest signature obtained by using a respective second secret key of the respective signer (S1, S2), the respective second secret key being from a signature scheme supporting aggregatable signatures;
    - the aggregator (A1) verifying (7) the received batch digest signatures to determine whether or not the batch digest is correctly signed by the set of signers (S1, S2);
    - the aggregator (A1) aggregating (7) a set of correctly signed batch digest signatures to obtain an aggregated batch digest signature; and
    - the aggregator (A1) including (7) the aggregated batch digest signature in the batch.

2. The method according to claim 1, wherein the method further comprises the aggregator (A1) sending (8) a respective fourth data package to one or more verifiers (V1, V2), the respective fourth data package comprising the batch comprising the set of the correctly signed payloads, the aggregated batch digest signature, and the signer identifiers of the signers (S1, S2) whose payload is in the batch.

3. The method according to claim 2, wherein the respective fourth data package further comprises the payload signatures from the signers (S1, S2) whose batch digest signature was not received by the aggregator (A1) within a given time window.

4. The method according to any one of the preceding claims, wherein in response to the respective signer (S1, S2) receiving the respective second data package, the method further comprises the respective signer (S1, S2) verifying (5) that the payload of the respective signer (S1, S2) matches the received proof of inclusion, and that the received batch digest also matches the received proof of inclusion.

5. The method according to any one of the preceding claims, wherein the number of the obtained proofs of inclusion equals the number of the payloads in the batch, and/or wherein the batch comprises at most one payload per signer (S1, S2).

6. The method according to any one of the preceding claims, wherein the method comprises computing (3) a cryptographic commitment of the batch to obtain the batch digest.

7. The method according to claim 6, wherein the cryptographic commitment of the batch is computed by using a Merkle tree, and the batch digest is a root of the Merkle tree.

8. The method according to any one of the preceding claims, wherein prior to aggregating (7) the set of correctly signed batch digest signatures, the method comprises replacing the corresponding payload signatures with the correctly signed batch digest signatures received by the aggregator within a given time window.

9. The method according to any one of the preceding claims, wherein the second secret keys are BLS secret keys, and/or

    wherein the first and second secret keys are secret keys from different cryptographic signature schemes, or the first and second secret keys are secret keys from the same cryptographic signature scheme, and/or
    the respective first secret key is the same as the respective second secret key.

10. The method according to any one of the preceding claims, wherein the aggregator (A1) is an untrusted entity, and/or wherein the method involves a plurality of aggregators (A1) such that the plurality of aggregators exchange the data packages with the respective signer (S1, S2).

**11.** The method according to any one of the preceding claims, wherein the method further comprises one or more verifiers (V1, V2) verifying the aggregated batch digest signature by computing the batch digest and an aggregated public key using public keys of the signers (S1, S2) who contributed to obtaining the aggregated batch digest signature.

**12.** The method according to any one of the preceding claims, wherein in order to verify respective signatures, respective identifiers are used to fetch respective public keys from a public key infrastructure.

**13.** The method according to any one of the preceding claims, wherein the method further comprises the aggregator (A1) receiving (11) a respective acknowledgement message for correct authentication of a respective payload from a respective verifier (V1, V2), and the aggregator (A1) sending (12) a respective confirmation message for the correct authentication of the respective payload to the respective signer (S1, S2).

**14.** A non-transitory computer program product comprising instructions for implementing the steps of the method according to any one of the preceding claims when loaded and run on computing means of a computing device (A1).

**15.** A signature aggregator (A1) comprising the means for:

- receiving a set of first data packages from a set of signers (S1, S2), a respective first data package comprising a respective signer identifier, a respective payload, and a respective payload signature obtained by using a respective first secret key of a respective signer (S1, S2);
- verifying the payload signatures to determine whether or not the payloads are correctly signed;
- bundling a set of correctly signed payloads into a batch;
- obtaining a batch digest for the batch, and proofs of inclusion of the payloads in the batch;
- sending a respective second data package comprising the batch digest and a respective proof of inclusion to the respective signer, the respective proof of inclusion proving that the payload of the respective signer is included in the batch;
- receiving a set of third data packages from the set of signers (S1, S2), a respective third data package comprising the respective signer identifier, and a respective batch digest signature obtained by using a respective second secret key of the respective signer (S1, S2), the respective second secret key being from a signature scheme supporting aggregatable signatures;
- verifying the batch digest signatures to determine whether or not the batch digest is correctly signed by the set of signers (S1, S2);
- aggregating a set of correctly signed batch digest signatures to obtain an aggregated batch digest signature; and
- including the aggregated batch digest signature in the batch.

**Patentansprüche**

**1.** Ein Verfahren zum Aggregieren digitaler Signaturen, wobei das Verfahren umfasst:

- ein Aggregator (A1) empfängt (2) einen Satz erster Datenpakete von einem Satz von Unterzeichnern (S1, S2), wobei ein jeweiliges erstes Datenpaket eine jeweilige Unterzeichnerkennung, eine jeweilige Nutzlast und eine jeweilige Nutzlastsignatur umfasst, die unter Verwendung eines jeweiligen ersten geheimen Schlüssels eines jeweiligen Unterzeichners (S1, S2) erhalten wurde;
- der Aggregator (A1) überprüft (3) die Nutzlastsignaturen, um zu bestimmen, ob die Nutzlasten korrekt signiert sind oder nicht;
- der Aggregator (A1) bündelt (3) einen Satz korrekt signierter Nutzdaten zu einem Batch;
- der Aggregator (A1) erhält (3) einen Batch-Digest für den Batch und Nachweise für die Aufnahme der Nutzdaten in den Batch;
- der Aggregator (A1) sendet (4) ein jeweiliges zweites Datenpaket, das den Batch-Digest und einen jeweiligen Nachweis für die Aufnahme umfasst, an den jeweiligen Unterzeichner (S1, S2), wobei der jeweilige Nachweis für die Aufnahme beweist, dass die Nutzlast des jeweiligen Unterzeichners (S1, S2) im Batch enthalten ist;
- der Aggregator (A1) empfängt (6) einen Satz dritter Datenpakete von dem Satz von Unterzeichnern (S1, S2), wobei ein jeweiliges drittes Datenpaket die jeweilige Unterzeichnerkennung und eine jeweilige Batch-Digest-Signatur umfasst, die unter Verwendung eines jeweiligen zweiten geheimen Schlüssels des jeweiligen Unterzeichners (S1, S2) erhalten wurde, wobei der jeweilige zweite geheime Schlüssel aus einem Signaturschema stammt, das aggregierbare Signaturen unterstützt;
- der Aggregator (A1) überprüft (7) die empfangenen Batch-Digest-Signaturen, um zu bestimmen, ob der Batch-Digest von dem Satz der Unterzeichner (S1, S2) korrekt signiert wurde oder nicht;
- der Aggregator (A1) aggregiert (7) einen Satz korrekt signierter Batch-Digest-Signaturen, um eine aggregierte Batch-Digest-Signatur zu erhalten; und
- der Aggregator (A1) schließt (7) die aggregierte Batch-Digest-Signatur in den Batch ein.

2. Das Verfahren gemäß Anspruch 1, wobei das Verfahren ferner umfasst, dass der Aggregator (A1) ein jeweiliges viertes Datenpaket an einen oder mehrere Prüfer (V1, V2) sendet (8), wobei das jeweilige vierte Datenpaket den Batch umfasst, der den Satz der korrekt signierten Nutzdaten, die aggregierte Batch-Digest-Signatur und die Unterzeichnerkennnungen der Unterzeichner (S1, S2) umfasst, deren Nutzdaten sich im Batch befinden.

3. Das Verfahren gemäß Anspruch 2, wobei das jeweilige vierte Datenpaket außerdem die Nutzlastsignaturen der Unterzeichner (S1, S2) umfasst, deren Batch-Digest-Signatur nicht innerhalb eines bestimmten Zeitfensters vom Aggregator (A1) empfangen wurde.

4. Das Verfahren gemäß einem der vorhergehenden Ansprüche, wobei das Verfahren in Reaktion auf den Empfang des jeweiligen zweiten Datenpakets durch den jeweiligen Unterzeichner (S1, S2) weiterhin umfasst, dass der jeweilige Unterzeichner (S1, S2) überprüft (5), dass die Nutzlast des jeweiligen Unterzeichners (S1, S2) mit dem empfangenen Nachweis für die Aufnahme übereinstimmt und dass die empfangene Batch-Digest ebenfalls mit dem empfangenen Nachweis für die Aufnahme übereinstimmt.

5. Das Verfahren gemäß einem der vorhergehenden Ansprüche, wobei die Anzahl der erhaltenen Nachweise für die Aufnahme der Anzahl der Nutzdaten im Batch entspricht, und/oder wobei der Batch höchstens eine Nutzlast pro Unterzeichner (S1, S2) umfasst.

6. Das Verfahren gemäß einem der vorhergehenden Ansprüche, wobei das Verfahren das Berechnen (3) einer kryptographischen Verpflichtung des Batches zum Erhalten des Batch-Digests umfasst.

7. Das Verfahren gemäß Anspruch 6, wobei die kryptografische Verpflichtung des Batches unter Verwendung eines Merkle-Baums berechnet wird und der Batch-Digest eine Wurzel des Merkle-Baums ist.

8. Das Verfahren gemäß einem der vorhergehenden Ansprüche, wobei vor dem Aggregieren (7) des Satzes korrekt signierter Batch-Digest-Signaturen das Verfahren das Ersetzen der entsprechenden Nutzlastsignaturen durch die korrekt signierten Batch-Digest-Signaturen umfasst, die vom Aggregator innerhalb eines gegebenen Zeitfensters empfangen wurden.

9. Das Verfahren nach einem der vorhergehenden Ansprüche, wobei die zweiten geheimen Schlüssel BLS-Geheimschlüssel sind, und/oder

wobei der erste und der zweite geheime Schlüssel geheime Schlüssel aus verschiedenen kryptographischen Signaturschemata sind oder der erste und der zweite geheime Schlüssel geheime Schlüssel aus demselben kryptographischen Signaturschema sind, und/oder der jeweils erste geheime Schlüssel ist identisch mit dem jeweils zweiten geheimen Schlüssel.

10. Das Verfahren gemäß einem der vorhergehenden Ansprüche, wobei der Aggregator (A1) eine nicht vertrauenswürdige Entität ist, und/oder wobei das Verfahren eine Vielzahl von Aggregatoren (A1) umfasst, so dass die Vielzahl von Aggregatoren die Datenpakete mit dem jeweiligen Unterzeichner (S1, S2) austauscht.

11. Das Verfahren gemäß einem der vorhergehenden Ansprüche, wobei das Verfahren außerdem einen oder mehrere Prüfer (V1, V2) umfasst, die die Signatur des aggregierten Batch-Digests prüfen, indem sie den Batch-Digest und einen aggregierten öffentlichen Schlüssel unter Verwendung der öffentlichen Schlüssel der Unterzeichner (S1, S2) berechnen, die zum Erhalt der Signatur des aggregierten Batch-Digests beigetragen haben.

12. Das Verfahren gemäß einem der vorhergehenden Ansprüche, wobei zum Überprüfen der jeweiligen Signaturen die jeweiligen Kennungen verwendet werden, um die jeweiligen öffentlichen Schlüssel aus einer Public-Key-Infrastruktur abzurufen.

13. Das Verfahren gemäß einem der vorhergehenden Ansprüche, wobei das Verfahren ferner umfasst, dass der Aggregator (A1) eine jeweilige Quittierungsnachricht für die korrekte Authentifizierung einer jeweiligen Nutzlast von einem jeweiligen Prüfer (V1, V2) empfängt (11) und dass der Aggregator (A1) eine jeweilige Bestätigungsnachricht für die korrekte Authentifizierung der jeweiligen Nutzlast an den jeweiligen Unterzeichner (S1, S2) sendet (12).

14. Ein nichtflüchtiges Computerprogrammprodukt, das Anweisungen zum Implementieren der Schritte des Verfahrens gemäß einem der vorhergehenden Ansprüche umfasst, wenn es auf Rechenmitteln eines Rechengeräts (A1) geladen und ausgeführt wird.

15. Ein Signaturaggregator (A1), der die Mittel umfasst zum:

- Empfangen eines Satzes erster Datenpakete von einem Satz von Unterzeichnern (S1, S2), wobei ein jeweiliges erstes Datenpaket eine jeweilige Unterzeichnerkennung, eine jeweilige Nutzlast und eine jeweilige Nutzlastsignatur umfasst, die unter Verwendung eines jeweiligen ersten geheimen Schlüssels eines jeweiligen Unterzeichners (S1, S2) erhalten wurde;

- Überprüfen der Nutzlastsignaturen, um festzustellen, ob die Nutzlasten korrekt signiert sind oder nicht;

- Bündelung eines Satzes korrekt signierter Nutzdaten in einem Batch;

- Erhalten eines Batch-Digests für den Batch und von Nachweisen für die Aufnahme der Nutzdaten in den Batch;

- Senden eines jeweiligen zweiten Datenpakets, das den Batch-Digests und einen jeweiligen Nachweis für die Aufnahme umfasst, an den jeweiligen Unterzeichner, wobei der jeweilige Nachweis für die Aufnahme beweist, dass die Nutzlast des jeweiligen Unterzeichners im Batch enthalten ist;

- Empfangen eines Satzes dritter Datenpakete von dem Satz der Unterzeichner (S1, S2), wobei ein jeweiliges drittes Datenpaket die jeweilige Unterzeichnerkennung und eine jeweilige Batch-Digest-Signatur umfasst, die unter Verwendung eines jeweiligen zweiten geheimen Schlüssels des jeweiligen Unterzeichners (S1, S2) erhalten wurde, wobei der jeweilige zweite geheime Schlüssel aus einem Signaturschema stammt, das aggregierbare Signaturen unterstützt;

- Überprüfen der Batch-Digest-Signaturen, um zu bestimmen, ob der Batch-Digest von dem Satz der Unterzeichner (S1, S2) korrekt signiert wurde oder nicht;

- Aggregieren eines Satzes korrekt signierter Batch-Digest-Signaturen, um eine aggregierte Batch-Digest-Signatur zu erhalten; und

- Einschließen der aggregierten Batch-Digest-Signatur in den Batch.

## Revendications

1. Un procédé d'agrégation de signatures numériques, le procédé comprenant :

- un agrégateur (A1) recevant (2) un ensemble de premiers paquets de données provenant d'un ensemble de signataires (S1, S2), un premier paquet de données respectif comprenant un identifiant de signataire respectif, une charge utile respective et une signature de charge utile respective obtenue en utilisant une première clé secrète respective d'un signataire respectif (S1, S2) ;

- l'agrégateur (A1) vérifiant (3) les signatures des charges utiles pour déterminer si les charges utiles sont correctement signées ou non ;

- l'agrégateur (A1) regroupant (3) un ensemble de charges utiles correctement signées dans un lot ;

- l'agrégateur (A1) obtenant (3) un résumé de lot pour le lot, et des preuves d'inclusion des charges utiles dans le lot ;

- l'agrégateur (A1) envoyant (4) un second paquet de données respectif comprenant le résumé de lot et une preuve d'inclusion respective au signataire respectif (S1, S2), la preuve d'inclusion respective prouvant que la charge utile du signataire respectif (S1, S2) est incluse dans le lot ;

- l'agrégateur (A1) recevant (6) un ensemble de troisièmes paquets de données provenant de l'ensemble de signataires (S1, S2), un troisième paquet de données respectif comprenant l'identifiant de signataire respectif, et une signature de résumé de lot respective obtenue en utilisant une seconde clé secrète respective du signataire respectif (S1, S2), la seconde clé secrète respective étant issue d'un schéma de signature soutenant des signatures agrégeables ;

- l'agrégateur (A1) vérifiant (7) les signatures de résumé de lot reçues pour déterminer si le résumé de lot est ou non correctement signé par l'ensemble des signataires (S1, S2) ;

- l'agrégateur (A1) agrégeant (7) un ensemble de signatures de résumé de lot correctement signées pour obtenir une signature de résumé de lot agrégée ; et

- l'agrégateur (A1) incluant (7) la signature de résumé de lot agrégée dans le lot.

2. Le procédé selon la revendication 1, dans lequel le procédé comprend en outre l'agrégateur (A1) envoyant (8) un quatrième paquet de données respectif à un ou plusieurs vérificateurs (V1, V2), le quatrième paquet de données respectif comprenant le lot comprenant l'ensemble des charges utiles correctement signées, la signature de résumé de lot agrégée et les identifiants de signataire des signataires (S1, S2) dont la charge utile est dans le lot.

3. Le procédé selon la revendication 2, dans lequel le quatrième paquet de données respectif comprend en outre les signatures de charge utile provenant des signataires (S1, S2) dont la signature de résumé de lot n'a pas été reçue par l'agrégateur (A1) dans une fenêtre temporelle donnée.

4. Le procédé selon l'une quelconque des revendications précédentes, dans lequel, en réponse à la réception par le signataire respectif (S1, S2) du second paquet de données respectif, le procédé comprend en outre la vérification (5) par le signataire respectif (S1, S2) que la charge utile du signataire respectif (S1, S2) correspond à la preuve d'inclusion reçue, et que le résumé de lot reçu correspond également à la preuve d'inclusion reçue.

5. Le procédé selon l'une quelconque des revendications précédentes, dans lequel le nombre de preuves d'inclusion obtenues est égal au nombre de charges utiles dans le lot, et/ou dans lequel le lot comprend au plus une charge utile par signataire (S1, S2).

6. Le procédé selon l'une quelconque des revendications précédentes, dans lequel le procédé comprend le calcul (3) d'un engagement cryptographique du lot pour obtenir le résumé de lot.

7. Le procédé selon la revendication 6, dans lequel l'engagement cryptographique du lot est calculé en utilisant un arbre de Merkle, et le résumé de lot est une racine de l'arbre de Merkle.

8. Le procédé selon l'une quelconque des revendications précédentes, dans lequel avant d'agréger (7) l'ensemble de signatures de résumé de lot correctement signées, le procédé comprend le remplacement des signatures de charge utile correspondantes par les signatures de résumé de lot correctement signées reçues par l'agrégateur dans une fenêtre temporelle donnée.

9. Le procédé selon l'une quelconque des revendications précédentes, dans lequel les secondes clés secrètes sont des clés secrètes BLS, et/ou

dans lequel les première et seconde clés secrètes sont des clés secrètes provenant de schémas de signature cryptographique différents, ou les première et seconde clés secrètes sont des clés secrètes provenant du même schéma de signature cryptographique, et/ou la première clé secrète respective est la même que la seconde clé secrète respective.

10. Le procédé selon l'une quelconque des revendications précédentes, dans lequel l'agrégateur (A1) est une entité non fiable, et/ou dans lequel le procédé implique une pluralité d'agrégateurs (A1) de telle sorte que la pluralité d'agrégateurs échangent les paquets de données avec le signataire respectif (S1, S2).

11. Le procédé selon l'une quelconque des revendications précédentes, dans lequel le procédé comprend en outre un ou plusieurs vérificateurs (V1, V2) vérifiant la signature de résumé de lot agrégée en calculant le résumé de lot et une clé publique agrégée à l'aide des clés publiques des signataires (S1, S2) qui ont contribué à l'obtention de la signature de résumé de lot agrégée.

12. Le procédé selon l'une quelconque des revendications précédentes, dans lequel, afin de vérifier les signatures respectives, des identifiants respectifs sont utilisés pour récupérer des clés publiques respectives à partir d'une infrastructure de clés publiques.

13. Le procédé selon l'une quelconque des revendications précédentes, dans lequel le procédé comprend en outre l'agrégateur (A1) recevant (11) un message d'accusé de réception respectif pour l'authentification correcte d'une charge utile respective à partir d'un vérificateur respectif (V1, V2), et l'agrégateur (A1) envoyant (12) un message de confirmation respectif pour l'authentification correcte de la charge utile respective au signataire respectif (S1, S2).

14. Un produit de programme informatique non transitoire comprenant des instructions pour mettre en oeuvre les étapes du procédé selon l'une quelconque des revendications précédentes lorsqu'il est chargé et exécuté sur des moyens informatiques d'un dispositif informatique (A1).

15. Un agrégateur de signatures (A1) comprenant les moyens pour:

- recevoir un ensemble de premiers paquets de données provenant d'un ensemble de signataires (S1, S2), un premier paquet de données respectif comprenant un identifiant de signataire respectif, une charge utile respective et une signature de charge utile respective obtenue en utilisant une première clé secrète respective d'un signataire respectif (S1, S2) ;
- vérifier les signatures des charges utiles pour déterminer si les charges utiles sont correctement signées ou non ;
- regrouper un ensemble de charges utiles correctement signées dans un lot ;
- obtenir un résumé de lot pour le lot et des preuves d'inclusion des charges utiles dans le lot ;
- envoyer un second paquet de données respectif comprenant le résumé de lot et une preuve d'inclusion respective au signataire respectif, la preuve d'inclusion respective prouvant que la charge utile du signataire respectif est incluse dans le lot ;
- recevoir un ensemble de troisièmes paquets de données provenant de l'ensemble de signataires (S1, S2), un troisième paquet de données respectif comprenant l'identifiant de signataire respectif et une signature de résumé de lot respective obtenue en utilisant une seconde clé secrète respective du signataire respectif (S1, S2), la seconde clé secrète respective étant issue d'un schéma de signature soutenant des signatures agrégeables ;

- vérifier les signatures du résumé de lot pour déterminer si le résumé de lot est ou non correctement signé par l'ensemble des signataires (S1, S2) ;

- regrouper un ensemble de signatures de résumé de lot correctement signées pour obtenir une signature de résumé de lot agrégée ; et

- inclure la signature de résumé de lot agrégée dans le lot.

**Fig. 1**

**Fig. 2**

**Fig. 3**

**Fig. 4**

**EP 4 343 599 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DAN BONEH** ; **BEN LYNN** ; **HOVAV SHACHAM**. Short Signatures from the Weil Pairing. *Journal of Cryptology*, 2004, vol. 17 (4)
- **CLAUS P. SCHNORR**. Efficient Signature Generation by Smart Cards. *Journal of Cryptology*, 1991, vol. 4 (3)
- **DAN BONEH** ; **CRAIG GENTRY** ; **BEN LYNN** ; **HOVAV SHACHAM**. Aggregate and Verifiably Encrypted Signatures from Bilinear Maps. *Advances in Cryptology, EUROCRYPT*, 2003
- A public-key cryptosystem suitable for digital multi-signatures. **KAZUHARU ITAKURA** ; **KATSUHIRO NAKAMURA**. NEC Research & Development. 1983
- **DAN BONEH** ; **MANU DRIJVERS** ; **GREGORY NEVEN**. Compact Multi-signatures for Smaller Blockchains. *Advances in Cryptology, ASIACRYPT*, 2018
- **GREGORY MAXWELL** ; **ANDREW POELSTRA** ; **YANNICK SEURIN** ; **PIETER WUILLE**. Simple Schnorr multi-signatures with applications to Bitcoin. *Designs, Codes and Cryptography*, 2019, vol. 87 (9)
- Aggregate and Verifiably Encrypted Signatures from Bilinear Maps. **DAN BONEH** ; **CRAIG GENTRY** ; **BEN LYNN** ; **HOVAV SHACHAM**. Advances in Cryptology. EUROCRYPT, 2003
- **DANIEL J. BERNSTEIN**. Curve25519: New Diffie-Hellman Speed Records. *Public Key Cryptography, PKC '06*, 2006, vol. 3958

19